# EUROPEAN PATENT APPLICATION

(11) **EP 4 752 721 A1**
(43) Date of publication of application: **03.06.2026**
(21) Application number: 24216551.2
(22) Date of filing: 29.11.2024
(51) Int. Cl.: G06F 9/50, G06N 20/00, H04L 67/10

(54) **HYBRID AI ORCHESTRATION SYSTEM AND METHOD FOR DISTRIBUTING ARTIFICIAL INTELLIGENCE TASKS ACROSS DEVICE, NETWORK, AND/OR CLOUD RESOURCES**

(71) Applicant: Deutsche Telekom AG, 53113 Bonn (DE)
(72) Inventor: Bayer, Nico, 61231 Bad Nauheim (DE); Sid Ali, Badie, 53171 Bonn (DE); Drüsedow, Steffen, 16727 Oberkrämer (DE); Changsoon, Choi, 53175 Bonn (DE)
(74) Representative: karo IP

(57) **Abstract**

A computer-implemented method for distributing an artificial intelligence, Al, task in a hybrid AI orchestration system, the method comprising:
• initiating an AI request for an AI task at a UE-hybrid-AI-orchestrator associated with user equipment, UE;
• transmitting a request from the UE-hybrid-AI-orchestrator to a network-assisted-Ai-orchestrator located in a telecommunications network, the AI request soliciting network-related information and/or remote AI capability information relevant to the AI task;
• receiving, at the UE-hybrid-AI-orchestrator, network-related information and/or remote AI capability information from the network-assisted-Ai-orchestrator;
• analyzing, by the UE-hybrid-AI-orchestrator, the received network-related information and/or remote AI capability information to determine whether to execute the AI task on the UE on an on-device AI model, on a remote AI model within the telecommunications network, and/or on a cloud-based AI model in a remote cloud environment;
• executing the AI task based on the determination made by the UE-hybrid-AI-orchestrator, wherein the UE-hybrid-AI-orchestrator:
∘ transmits the AI task to an on-device AI model if local execution is determined, transmits the AI task to the distributed AI model if execution within the telecommunications network is determined, and/or transmits the AI task to a cloud-based AI model in a remote cloud environment if remote cloud execution is determined.

## Description

The present invention relates to artificial intelligence (AI) systems and, in particular, to hybrid AI orchestration systems designed to optimize the execution of AI tasks by selectively distributing these tasks across user devices, network infrastructure, and cloud environments.

With the rapid development of artificial intelligence (AI) technologies, particularly large language models (LLMs) and multi-modal AI systems, there is an increasing demand for personalized and responsive AI services across consumer devices. Major technology players, including Apple, OpenAI, Google, and Samsung, are progressively shifting their focus toward creating personal AI assistant (PAA) services that are multi-modal, capable of processing various types of input such as text, image, audio and video data, to provide more natural human-computer interaction.

For instance, Apple's strategy involves transforming its "Siri" assistant into a more capable personal AI assistant by leveraging a combination of cloud-based large language models (LLMs) and on-device LLM capabilities. Apple's approach to AI focuses heavily on user privacy and local processing, with a "hybrid AI" model that relies on both on-device LLMs and cloud-based LLMs managed within Apple's private compute cloud. This strategy allows Apple to offload more complex and resource-intensive tasks to the cloud while maintaining privacy and responsiveness for simpler tasks executed locally.

OpenAI, another major player, relies predominantly on cloud-based LLMs for delivering multi-modal AI assistant services. For example, OpenAI's GPT-4 (Omni) model supports multi-modal conversational AI functionalities, including real-time object streaming and contextually aware responses. However, OpenAI's approach, which is heavily cloud-dependent, often leads to higher latency and slower responses, especially in applications that demand real-time interaction.

Google and Samsung have adopted a similar hybrid AI approach, where reasoning tasks are managed by on-device models, and more complex understanding tasks are offloaded to powerful cloud-based models. For instance, Google introduced "Gemini Live," a hybrid AI system that enables users to interact with their personal AI assistant in real-time, with cloud-based processing for tasks requiring higher computational capacity. Samsung employs the Gemini model for smartphones, aiming to reduce latency and optimize resource allocation by distributing tasks between on-device and cloud-based AI models.

Recent developments in AI model optimization and semiconductor technology are enabling more powerful on-device AI capabilities. Innovations such as Post-Training Quantization (PTQ) and model distillation allow large language models to be efficiently deployed on-device, enabling small on-device LLMs to perform increasingly complex tasks. Additionally, advanced semiconductor packaging technologies, like Chiplet technology, are enhancing Neural Processing Unit (NPU) integration within mobile devices, making these devices more capable of executing AI inference locally.

However, while on-device LLMs continue to improve, cloud-based LLMs remain far more advanced, with models now containing much more than tens of billions of parameters and progressing rapidly in complexity. For instance, OpenAI's "Strawberry o1" model introduces "self-taught reasoning" (STaR), a capability for self-inference that allows the model to autonomously learn to solve complex problems. This capability illustrates that, in many cases, cloud-based LLMs are significantly more powerful and intelligent than on-device models, particularly for high-complexity tasks requiring extensive processing power and reasoning capabilities.

In light of these advancements, most smartphone manufacturers are now adopting hybrid AI systems that utilize both on-device and cloud-based AI models. To coordinate the use of these resources, manufacturers are implementing hybrid AI orchestrators that serve as central management hubs. These orchestrators make real-time decisions on AI task execution, directing each task to the most appropriate resource-either on-device or in the cloud-based on various criteria, including application type, service intent, hardware capabilities, and network conditions.

Despite the progress made by these companies, existing solutions in hybrid AI orchestration still face limitations. For example, the distribution of tasks between on-device, network-based, and cloud-based resources is often static and not flexible.

The task of the present invention is to provide an advanced hybrid AI orchestration system and method that enables an enhanced distribution of AI tasks across user equipment (UE), network infrastructure, and cloud environments.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a computer-implemented method for distributing an artificial intelligence (AI) task in a hybrid AI orchestration system is disclosed, the method comprising:
- initiating an AI request for an AI task at a UE-hybrid-AI-orchestrator associated with user equipment (UE);
- transmitting a request from the UE-hybrid-AI-orchestrator to a network-assisted-AI-orchestrator located in a telecommunications network, the request soliciting network-related information and/or remote AI capability information relevant to the AI task;

- receiving, at the UE-hybrid-AI-orchestrator, network-related information and/or remote AI capability information from the network-assisted-AI-orchestrator;
- analyzing, by the UE-hybrid-AI-orchestrator, the received network-related information and/or remote AI capability information to determine whether to execute the AI task on the UE, on a remote AI model within the telecommunications network, and/or on a cloud-based AI model in a remote cloud environment;
- executing the AI task based on the determination made by the UE-hybrid-AI-orchestrator, wherein the UE-hybrid-AI-orchestrator:
   ∘ transmits the AI task to an on-device AI model if local execution is determined;
   ∘ transmits the AI task to the remote AI model within the telecommunications network if execution by the remote AI model of the telecommunication network is determined; and/or
      ▪ in this case, the network-assisted-AI-orchestrator can be informed that the remote AI model at least in part executes the AI task;
   ∘ transmits the AI task to a cloud-based AI model in a remote cloud environment if remote cloud execution is determined.
      ▪ in this case, the network-assisted-AI-orchestrator can be informed that the remote cloud-based AI model in the remote cloud environment at least in part executes the AI task;

The invention provides a method for dynamically distributing AI tasks within a hybrid AI orchestration system that includes on-device, network-based, and/or cloud-based AI resources. The system is initiated when the UE-hybrid-AI-orchestrator, implemented on the user equipment (UE), receives a request for an AI task from apps or services. This task request may involve a range of AI functionalities, such as speech-to-text conversion, image recognition, or more complex multi-modal interactions that involve both text, image and/or video processing.

Upon receiving the AI task request, the UE-hybrid-AI-orchestrator can assess whether additional remote AI resources are necessary and sends a request to the network-assisted-AI-orchestrator located within the telecommunications network. This request queries the network for relevant network-related information, such as current network latency, bandwidth availability, and quality of service (QoS) levels. Additionally, the request may ask for remote AI capability information that reflects the computational power, model capacity, or processing latency of remote AI resources either within the network or in the cloud.

Once this information is received, the UE-hybrid-AI-orchestrator performs an analysis of these parameters to determine the optimal execution location for the AI task. This decision may be influenced by several factors:
- Network availability and quality, which could affect task latency if the task is performed remotely.
- Computational requirements of the AI task, which might exceed the on-device capacity.
- Capabilities of on-device versus remote models, as cloud-based or network-based models may offer better performance or more advanced functionality for complex tasks. This also depends on AI task. For example, simple translation for some short order can be easily done with on-device LLM. On the other hand, asking reasoning or complicated opinions should be done with cloud LLM.

Based on the analysis, the UE-hybrid-AI-orchestrator executes the task according to the determined execution location:
1. If on-device execution is chosen, the UE-hybrid-AI-orchestrator directs the task to an on-device AI model, taking advantage of local processing to reduce latency and maintain privacy.
2. If execution within the telecommunications network is determined, the UE-hybrid-AI-orchestrator transmits the task to the distributed AI cloud with the help of the network-assisted-AI-orchestrator, which executes the task on a distributed AI model within the network. This option provides a balance between latency and computational power.
3. If cloud execution is chosen, the UE-hybrid-AI-orchestrator transmits the task to a cloud-based AI model, leveraging the advanced computational resources of the cloud to handle more complex or resource-intensive tasks.

This method enhances flexibility in task execution, allowing the system to adapt to changing network conditions and task requirements. Technical advantages include reduced latency for tasks that can be processed locally, optimized use of network resources, and access to high-capability cloud resources for more complex tasks. This dynamic distribution ensures efficient allocation of processing power and reduces the need for constant network-dependent task processing.

In one example embodiment, a user initiates a voice command for an video recognition task, such as asking their phone to identify the type of plant in a photo. The UE-hybrid-AI-orchestrator assesses the computational demand of the image recognition task and queries the network-assisted-AI-orchestrator for network and capability data. If network latency is low and the distributed AI model in the network has the necessary capability, the UE-hybrid-AI-orchestrator may route the task to the network. Alternatively, if the on-device model can handle basic identification tasks, the orchestrator could perform the task locally to reduce latency. For more advanced recognition requiring high-level species identification and reasoning, the task may be routed to the cloud for detailed analysis. This configuration enables the system to respond in real-time, delivering the optimal balance of speed, efficiency, and accuracy, resulting in better customer experiences.

In an embodiment, the network-related information comprises at least one of network availability, quality of service (QoS), latency, reliability, and/or roaming status, and the remote AI capability information includes at least one of computational availability, AI model capability, expected power consumption and/or data processing latency at one or more remote AI resources."

These features specify the types of information that the UE-hybrid-AI-orchestrator may consider when determining the optimal execution location for an AI task. This information comprises both network-related factors and remote AI capability details.
1. Network-related information:
   ∘ Network availability: This measure indicates whether network resources are currently accessible or if connectivity is limited, potentially due to high demand or low coverage areas.
   ∘ Quality of Service (QoS): QoS metrics, such as packet loss, jitter, or bandwidth, help gauge the reliability and quality of the connection.
   ∘ Latency: The time it takes for data to travel between the UE and the network or cloud resources; lower latency may favor network processing.
   ∘ Roaming status: Indicates whether the UE is operating in a home network or a roaming network, which could impact both connectivity quality and potential cost.
   ∘ Other information such as reliability, etc
2. Remote AI capability information:
   ∘ Computational availability: The processing capacity of remote resources (e.g., available virtual CPUs or GPU cores), which affects how quickly tasks can be handled remotely.
   ∘ AI model capability: Information on the specific models available remotely, such as model size, training data, and features, which might determine suitability for complex tasks.
   ∘ Data processing latency: An estimate of the time needed for the remote AI model to process data, allowing the orchestrator to anticipate response times.
   ∘ Other information such as power consumption, e.g. the case that the device has not enough battery lifetime, the UE-hybrid-AI-orchestrator can "ask" the cloud to process AI workloads to reduce device power consumptions;

By incorporating these factors into its decision-making, the UE-hybrid-AI-orchestrator can ensure that tasks are directed to resources that are best suited to handle them efficiently. Technical advantages include improved accuracy in selecting the optimal processing location and the ability to dynamically adapt to network fluctuations or changes in available processing power.

In an example embodiment, the user asks their AI-based apps/services to analyze real-time video for object tracking in a moving environment, such as while on a train. The UE-hybrid-AI-orchestrator requests network-related information, finding that network latency is high due to frequent changes in network cells, while cloud processing is stable. Given these conditions, the orchestrator may opt for on-device processing if the task can be managed locally or may recommend task queuing until a more stable connection is available. This scenario illustrates how network and AI capability data help in optimizing task execution under changing conditions.

In an embodiment, the method further comprises
- receiving an AI response at the UE-hybrid-AI-orchestrator from one or more of the selected AI models, the response being generated based on the execution of the AI task at the selected location; and
- providing the AI response to an application on the user equipment (UE).

This specifies the process by which the UE-hybrid-AI-orchestrator manages the AI response after executing the task at the designated location. Once the AI task has been executed by either the on-device AI model, the distributed AI model in the network, and/or the cloud-based AI model, the generated response is sent back to the UE-hybrid-AI-orchestrator. The orchestrator then provides this response to the application that originally requested the AI task. Hence, the UE-hybrid-AI-orchestrator can combine the partial answers to the final answer if the partial answers were generated by more than one AI model. If the AI response was only processed by a single AI model it can be provided directly from that AI model to the user equipment. For example if the AI response was generated by the AI model within the telecommunications network, this AI model can directly provide its answer to the user equipment without further interaction by the UE-hybrid-AI-orchestrator. Or if the AI response was generated by the on-device AI model, this AI model can directly provide its answer to the user equipment or the respective application of the UE without further interaction by the UE-hybrid-AI-orchestrator.

This approach ensures seamless integration of AI capabilities within user applications, regardless of where the actual processing occurs. By centralizing the response handling at the UE-hybrid-AI-orchestrator, the system maintains a unified user experience, with the orchestrator handling the complexities of distributing tasks and processing responses transparently to the end-user.

Technical advantages of this feature include:
- Enhanced user experience: Users receive responses directly from the requesting application without needing to know or manage where the processing took place.
- Reduced latency for time-sensitive applications: If the UE-hybrid-AI-orchestrator determines that on-device processing is optimal, the response time is minimized, providing immediate feedback to the user.
- Scalability: Applications can seamlessly scale to leverage cloud-based AI models for complex tasks without modifying the user-facing application interface.

In a possible embodiment, a navigation application on the UE requests real-time object recognition to identify landmarks along a travel route. The UE-hybrid-AI-orchestrator determines that the complexity of recognizing landmarks requires cloud-based processing, where more powerful models and image databases are available. After the cloud-based AI model executes the task, the resulting data (e.g., landmark names and descriptions) is sent back to the UE-hybrid-AI-orchestrator. The orchestrator then forwards this data to the navigation application, which displays it to the user in real-time as they travel, providing seamless and contextually rich information without delays. This setup allows the application to leverage cloud resources without needing separate handling for task execution and response retrieval.

In an embodiment, the method further comprises
- transmitting, by the UE-hybrid-AI-orchestrator, a request to the network to the network-assisted-AI-orchestrator to provide certain Quality of Service (QoS) values for the AI task, and
- forwarding, by the network-assisted-AI-orchestrator, the QoS request to the network.

This provides an important enhancement in which the UE-hybrid-AI-orchestrator can request better Quality of Service (QoS) and other network performance parameters to the network-assisted-AI-orchestrator. In scenarios where an AI task requires guaranteed performance - such as real-time processing, low-latency response, or more complicated AI processing such as reasoning - the UE-hybrid-AI-orchestrator can request the network-assisted-AI-orchestrator to ensure certain QoS standards in network are met.

The network-assisted-AI-orchestrator, upon receiving this request, forwards it to the E2E network management, which then adjusts its resources to meet the QoS requirements. This feature enables the AI orchestration system to support high-quality, uninterrupted service for critical tasks, ensuring that network-dependent AI tasks operate smoothly.

Technical advantages include:
- Improved performance/reliability: QoS guarantees provide consistent network performance for AI tasks that are sensitive to latency or require high bandwidth.
- Optimized resource allocation: The network can dynamically allocate resources based on the specific QoS requirements of the AI task, rather than using a generic approach.
- Enhanced application and customer experience: Applications requiring high QoS, such as augmented reality (AR) or virtual reality (VR) tasks, benefit from reduced latency and smoother execution.

A virtual assistant application can provide live translation for a video call. The UE-hybrid-AI-orchestrator identifies that real-time language translation requires high bandwidth and low latency to deliver accurate results. It sends a QoS request to the network-assisted-AI-orchestrator specifying these requirements. The network-assisted-AI-orchestrator forwards this request to the E2E network management, which prioritizes bandwidth and minimizes latency for the duration of the video call. This setup ensures smooth and immediate translations, significantly enhancing the quality of user experience during live interactions.

In an embodiment, the method further comprises
- receiving, by the network-assisted-AI-orchestrator, a confirmation feedback from the network indicating that the requested QoS values are set or can be guaranteed, and
- transmitting, by the UE-hybrid-AI-orchestrator, the AI task to the distributed AI model within the telecommunications network in response to receiving the confirmation feedback.

This further refines the QoS management process by introducing a feedback mechanism. Here, after the network-assisted-AI-orchestrator requests specific QoS parameters from the network, it waits to receive confirmation feedback indicating whether the requested QoS values can be met. This feedback loop enables real-time adjustments and helps the UE-hybrid-AI-orchestrator make an informed decision about task execution.

Upon receiving confirmation that the required QoS standards are in place, the UE-hybrid-AI-orchestrator proceeds to transmit the AI task to a distributed AI model within the telecommunications network or a cloud AI model within the AI providers. This enables the system to guarantee that tasks requiring high QoS are executed in environments that meet these standards, minimizing the risk of service interruptions or performance degradation.

Technical advantages:
- Reliability assurance: The feedback mechanism ensures that only when QoS requirements are met does the system commit to remote execution, avoiding potential latency issues.
- Dynamic adaptability: The UE-hybrid-AI-orchestrator can adjust the task routing if QoS feedback indicates that conditions are unsuitable.
- Resource efficiency: Network resources are allocated only when QoS guarantees are possible, avoiding unnecessary use of network infrastructure.

In an example use case, a remote healthcare monitoring application on the UE requests high-resolution video processing for a real-time medical consultation. The UE-hybrid-AI-orchestrator requests high QoS to ensure smooth video streaming and low latency. The network-assisted-AI-orchestrator forwards this request and receives confirmation from the network that the necessary bandwidth and low-latency conditions are set. Only then does the UE-hybrid-AI-orchestrator transmit the video processing task to a distributed AI model in the network, ensuring that the healthcare application runs without interruptions, delivering a high-quality experience that is critical for patient care.

In an embodiment, the method further comprises
- transmitting, by the UE-hybrid-AI-orchestrator, the AI task to an on-device AI model or a cloud-based AI model in a remote cloud environment if a successful confirmation feedback is not received from the network-assisted-AI-orchestrator.

This addresses scenarios where the network cannot guarantee the requested Quality of Service (QoS) levels. In such cases, the UE-hybrid-AI-orchestrator dynamically adjusts its execution strategy based on the received feedback. If the network-assisted-AI-orchestrator cannot confirm the necessary QoS parameters, indicating that the network resources are currently insufficient, the UE-hybrid-AI-orchestrator redirects the AI task to an alternative execution location.

Specifically, the UE-hybrid-AI-orchestrator can transmit the AI task to:
1. An on-device AI model if the task requirements are manageable by the device's hardware resources, thus eliminating network dependency and reducing potential delays.
2. A cloud-based AI model in a remote cloud environment if the task complexity exceeds the on-device capacity and network latency is not a critical factor for the application.

If the QoS request transmitted by the hybrid AI orchestrator cannot be guaranteed by the network-assisted AI orchestrator, the user equipment may still proceed to send the AI request to the distributed AI model. In such cases, the hybrid AI orchestrator independently determines whether to transmit the AI request, taking into account the absence of guaranteed QoS and relying on its own decision-making policies.

This feature provides resilience and adaptability, allowing the system to maintain performance standards even when network conditions are suboptimal.

Technical advantages:
- Increased reliability: By dynamically rerouting tasks, the system can avoid performance degradation due to inadequate network conditions.
- Reduced user disruption: The orchestrator ensures a seamless user experience by selecting an alternative execution path without user intervention.
- Optimized use of resources: On-device or cloud-based resources are used when the network is unable to fulfill QoS requirements, ensuring efficient utilization of system resources.

In a gaming application that requires low-latency AI-driven character interactions, the UE-hybrid-AI-orchestrator requests high QoS from the network for optimal performance. If the network-assisted-AI-orchestrator cannot guarantee this level of QoS due to network congestion, the UE-hybrid-AI-orchestrator may opt to execute the AI task locally using the on-device AI model, thus ensuring uninterrupted gameplay. Alternatively, for non-latency-sensitive tasks like generating game recommendations, the task may be rerouted to the cloud, where more extensive computational resources are available. As previously noted, even if network QoS requirements cannot be met, the user equipment may still proceed to send the AI task to the distributed AI model to benefit from low latency and high availability.

In an embodiment, the method further comprises
- distributing the AI task in flexible portions amongst any combination of an on-device AI model, a remote distributed AI model within the telecommunications network, and a cloud-based AI model in a remote cloud environment, wherein each portion is executed by the respective AI entity based on the analysis performed by the UE-hybrid-AI-orchestrator.

This introduces a powerful feature of the UE-hybrid-AI-orchestrator and/or NW-assisted-hybrid-AI-orchestrators: flexible distribution of AI tasks across multiple execution locations. Rather than assigning an entire task to a single location, the UE-hybrid-AI-orchestrator and/or NW-assisted-hybrid-AI-orchestrator is capable of dividing the AI task into discrete portions and assigning each portion to an appropriate execution environment based on resource availability, task complexity, and network conditions.

For example, complex multi-modal AI tasks (involving text, image, audio and video processing) can be split, with simpler components handled locally on the device, moderate tasks assigned to the network-based AI model, and high-complexity tasks sent to the cloud.

In an augmented reality (AR) application that processes video, audio, and text inputs simultaneously, the UE-hybrid-AI-orchestrator can split the task as follows: local processing for text-to-speech conversion, network-based processing for object recognition in video, and cloud-based processing for advanced spatial analysis. By leveraging multiple resources, the AR application achieves real-time performance without overburdening a single processing unit.

In an embodiment, the method further comprises
- leveraging, by the network-assisted-AI-orchestrator, network-related and sensing information from one or more sources, including Integrated Sensing and Communication (ISAC), Network Data Analytics Function (NWDAF), RAN Intelligent Controller (RIC), and/or Management Data Analytics Function (MDAF), to generate context-rich inputs for the AI task.

This describes how the network-assisted-AI-orchestrator utilizes a diverse array of network-related and sensing information to enhance the quality and accuracy of AI task execution. By collecting data from specialized network components - such as Integrated Sensing and Communication (ISAC), Network Data Analytics Function (NWDAF), RAN Intelligent Controller (RIC), and Management Data Analytics Function (MDAF) - the orchestrator can compile context-rich information that is beneficial for AI task processing.

These network components provide detailed insights into network status, device location, resource availability, and user context. For instance:
- ISAC can supply real-time device location and motion data, useful for location-based AI applications.
- NWDAF provides core network analytics, such as QoS and potential congestion points.
- RIC offers insights into radio access network conditions, which may affect connectivity quality.
- MDAF aggregates management and analytics data that can inform QoS adjustments and resource allocation.

This context-rich input enables the network-assisted-AI-orchestrator to make informed decisions that align with the current network state and user context, optimizing the task execution process.

In a fleet management system that uses real-time AI to monitor vehicle health and location, the network-assisted-AI-orchestrator leverages ISAC data to track vehicle positions and NWDAF data to monitor network congestion. If the network is congested in a specific area, the orchestrator can defer non-essential AI tasks or adjust data transfer rates accordingly, ensuring priority for essential monitoring tasks. This enables the fleet management system to provide accurate, contextually aware updates even under challenging network conditions.

In an embodiment, the context-rich inputs generated by the network-assisted-AI-orchestrator enable, e. g. the UE-hybrid-AI-orchestrator, to:
- apply guardrails to the AI models to address incomplete information,
- deliver context-aware feedback with a high degree of confidence, and
- prevent hallucinations in AI model's output (particularly LLM).

This teaches how the context-rich inputs from the network-assisted-AI-orchestrator are used to enhance the decision-making capabilities of the UE-hybrid-AI-orchestrator, particularly when tasks involve cloud-based AI models. Cloud-based AI models often rely on vast datasets and general-purpose reasoning capabilities, which can sometimes lead to errors, such as hallucinations (incorrect or nonsensical outputs), especially when contextual or situational information is incomplete. Regardless of which AI model is utilized-whether on-device, distributed AI, or cloud AI-network information from sources such as ISAC and NWDAF can be used as input to enhance AI inference. It should be noted that on-device AI models, due to their smaller model size, typically provide less accurate outputs compared to distributed or cloud-based AI models.

The network-assisted-AI-orchestrator mitigates this by providing detailed, context-rich data, enabling the UE-hybrid-AI-orchestrator to:
1. Apply guardrails: Guardrails are constraints or filters applied to the AI model's output, ensuring that the results align with the real-world context. For example, if a user asks for recommendations based on their current location, the orchestrator ensures the AI model only provides outputs relevant to that location.
2. Deliver context-aware feedback: By integrating contextual data, such as location, motion, or network conditions, the orchestrator ensures that the AI responses are accurate, meaningful, and aligned with the user's intent.
3. Prevent hallucinations: With access to accurate and real-time network and sensing information, the orchestrator ensures that cloud-based AI models only generate outputs based on valid and verifiable data, reducing the likelihood of incorrect or misleading results.

In a virtual shopping assistant application, a user requests recommendations for nearby stores that sell a specific item. Without guardrails, AI model may suggest inaccurate AI(LLM) inference output such as irrelevant or out-of-stock items due to incomplete context, location or inventory data. By leveraging context-rich inputs from ISAC and NWDAF (e.g., location data and real-time inventory data from nearby stores), the network-assisted-AI-orchestrator ensures the AI model only recommends relevant stores within the user's vicinity with relevant text outputs. This prevents hallucinated results (e.g., recommending faraway stores or unavailable products), enhancing the user experience.

In an embodiment, the AI task comprises multi-modal input data, including at least one of text, audio, image, or video, and the UE-hybrid-AI-orchestrator analyzes the type of input data to determine the most suitable AI model for executing the task.

This introduces multi-modal AI capabilities, where tasks involve processing diverse input types such as text, audio, image, or video. The UE-hybrid-AI-orchestrator analyzes the input data type and determines the optimal AI model for executing the task. Multi-modal tasks often require specialized models to handle each data type efficiently, and the orchestrator's ability to route tasks appropriately ensures high-performance processing.

The analysis may involve identifying:
- The primary input type (e.g., is the task audio-dominant, image-centric, or a combination?).
- The task complexity (e.g., simple transcription versus advanced video analysis).
- The resources available (e.g., local AI models for real-time audio transcription or cloud AI models for high-resolution image recognition, including underlying AI compute/memory resources for processing such AI models).

By selecting the most suitable model and/or processing node (device or cloud), the orchestrator ensures that the task is processed with minimal latency and maximum accuracy.

Technical advantages: Optimized resource use: Tasks are directed to models that specialize in handling specific input types. Improved performance: Multi-modal tasks are processed faster and more accurately by leveraging specialized AI models. Seamless user experience: The orchestrator ensures that users can interact with AI systems without being constrained by input type.

A virtual assistant application receives a user query: "What's in this picture?" accompanied by an image. The UE-hybrid-AI-orchestrator identifies that the task involves image recognition and routes the task to an on-device AI if it is capable of basic object detection. If the image requires more advanced interpretation (e.g., identifying brand logos or specific product details), the task may be forwarded to a cloud-based AI specializing in high-resolution image analysis. The response is then delivered to the user in real-time, integrating text and image processing seamlessly.

In an embodiment, the method further comprises
- receiving, by the UE-hybrid-AI-orchestrator, network feedback from the network-assisted-AI-orchestrator, wherein the feedback includes dynamic changes in network conditions, and
- dynamically adjusting the decision on task execution location based on the received feedback.

This adds an important real-time feedback mechanism, where the UE-hybrid-AI-orchestrator receives updates about changing network conditions from the network-assisted-AI-orchestrator. These updates may include:
- Bandwidth fluctuations: Indicating available bandwidth for task transmission.
- Latency changes: Highlighting whether current conditions are suitable for network or cloud-based task execution.
- Network congestion: Informing whether the network is overloaded and if alternative execution locations should be used.

By incorporating feedback from NW-assisted-hybrid-AI-orchestrator, the UE-hybrid-AI-orchestrator dynamically adjusts its task execution strategy. For instance, a task initially designated for cloud processing may be rerouted to an on-device AI or distributed AI in telco if network latency exceeds acceptable thresholds.

In an embodiment, the UE-hybrid-AI-orchestrator collaborates with the network-assisted-AI-orchestrator to split the AI task into subtasks, wherein the subtasks are executed collaboratively by an on-device AI model, a distributed AI model within the telecommunications network, and/or a cloud-based AI model in a remote cloud environment.

This extends the system's flexibility by allowing collaborative execution of AI tasks. The UE-hybrid-AI-orchestrator works with the network-assisted-AI-orchestrator to divide a complex AI task into smaller subtasks, each executed by a suitable AI model. Subtasks can be processed in parallel or sequentially, depending on dependencies such as NW and cloud status, with results aggregated to generate a unified response.

Technical advantages: Enhanced scalability: Large tasks that exceed the capacity of a single resource can be distributed for efficient processing. Faster execution: Parallel processing reduces overall execution time. Optimized resource allocation: Each subtask is directed to the most appropriate resource.

For a video analysis task involving scene detection, audio transcription, and face recognition, the orchestrators split the task as follows: on-device AI processes basic audio transcription, the distributed AI model in the network detects key scenes, and the cloud-based AI performs face recognition. The results are combined and sent back to the user, providing a seamless and efficient experience.

According to a second aspect of the invention, a UE-hybrid-AI-orchestrator of a user equipment (UE) is disclosed, the UE-hybrid-AI-orchestrator being configured to:
- transmit a request to a network-assisted-AI-orchestrator located in a telecommunications network, the request soliciting network-related information and/or remote AI capability information relevant to an artificial intelligence (AI) task and/or processing node (device, distributed AI cloud, central AI cloud);
- receive, from the network-assisted-AI-orchestrator, the network-related information and/or remote AI capability information;
- analyze the received network-related information and/or remote AI capability information to determine whether to execute the AI task on the UE, on a remote distributed AI model within the telecommunications network, and/or on a cloud-based AI model in a remote cloud environment; and
- distribute the AI task based on the determination made.

This describes the UE-hybrid-AI-orchestrator, a critical component of the hybrid AI orchestration system, and its configuration within the user equipment (UE). The orchestrator serves as a decision-making hub that enables intelligent task distribution across multiple AI resources, balancing performance, resource availability, and user experience.

Transmission of Requests: The UE-hybrid-AI-orchestrator can generate and send requests to the network-assisted-AI-orchestrator for network-related information (e.g., latency, QoS, or bandwidth availability) and remote AI capability data (e.g., processing power, model type, available compute/memory resource of processing nodes and expected response time).

Reception of Information: Upon receiving the requested information, the orchestrator consolidates the data and evaluates the conditions for task execution. This process ensures that tasks are routed to locations best suited to handle them based on the task's complexity and current resource availability.

Analysis and Task Distribution: The orchestrator uses a decision matrix that considers multiple factors-network quality, hardware capabilities, and AI model features-to determine whether the AI task should be executed locally, within the network, or in the cloud. Tasks are then distributed to the selected location accordingly.

A smart home assistant application running on a smartphone uses the UE-hybrid-AI-orchestrator to manage a voice command for generating a summary of household energy usage. The orchestrator queries the network-assisted-AI-orchestrator for latency and model availability data. Based on the results, the orchestrator determines that the task can be handled locally for basic analysis but forwards more detailed insights to the cloud, where advanced energy models are hosted. The orchestrator provides the final combined result to the user, offering both speed and accuracy.

According to a third aspect of the invention, a network-assisted-AI-orchestrator of a telecommunications network is disclosed, the network-assisted-AI-orchestrator being configured to:
- receive a request from a UE-hybrid-AI-orchestrator implemented within user equipment (UE), the request soliciting network-related information and/or remote AI capability information relevant to an artificial intelligence (AI) task;
- collect network-related information, including at least one of network availability, quality of service (QoS), latency, and/or roaming status and/or obtain remote AI capability information, including at least one of computational availability, AI model capability, and/or data processing latency at one or more remote AI resources;
- provide the collected network-related information and/or remote AI capability information to the UE-hybrid-AI-orchestrator.

This details the role of the network-assisted-AI-orchestrator, which resides within the telecommunications network and acts as a centralized data aggregator and decision enabler for the UE-hybrid-AI-orchestrator.
1. Receiving Requests: The network-assisted-AI-orchestrator receives detailed queries from the UE-hybrid-AI-orchestrator, requesting both network-related and remote AI capability information. These requests are tailored to the specific needs of the AI task.
2. Collecting Information: The network-assisted-AI-orchestrator interacts with various network and/or cloud elements to collect: Network-related data such as QoS metrics, current bandwidth availability, and latency. Remote AI capability information regarding the availability and performance of distributed AI models and cloud-based resources. It is quite common that each cloud has its own cloud orchestrator. NW-assisted-AI-orchestrator needs to communicate with cloud orchestrator for distributed AI cloud and cloud orchestrator for centralized AI cloud.
3. Providing Feedback: After consolidating the data, the network-assisted-AI-orchestrator sends the relevant information back to the UE-hybrid-AI-orchestrator, enabling it to make informed decisions about task execution.

In a telemedicine application, a user requests an AI analysis of medical images. The UE-hybrid-AI-orchestrator sends a request to the network-assisted-AI-orchestrator for available network bandwidth and distributed AI model capabilities. The network-assisted-AI-orchestrator retrieves real-time network metrics (e.g., low latency and high bandwidth in the local region) and confirms that an advanced distributed AI model for medical imaging is available. This information enables the UE-hybrid-AI-orchestrator to execute the task in the network, ensuring rapid and accurate results. To provide more illustrative examples of generative AI applications based on large language models (LLMs), scenarios similar to demonstrations by OpenAI can be considered. For instance, streaming video of a dog and querying the AI with questions such as "Do you have any idea what this dog is doing or wanting?" These types of generative AI examples effectively demonstrate the practical utility and contextual reasoning capabilities of the system, making the technology more convincing and relatable.

According to a fourth aspect of the invention, a communication system configured to distribute an artificial intelligence (AI) task in a hybrid AI orchestration system, the system comprising:
- a UE-hybrid-AI-orchestrator described above implemented within user equipment (UE) and/or a network-assisted-AI-orchestrator described above implemented within a telecommunications network; wherein the system is configured to execute the steps of the method described above.

This teaches the hybrid AI orchestration system into a comprehensive framework comprising both the UE-hybrid-AI-orchestrator and the network-assisted-AI-orchestrator.

A smart vehicle system integrates the hybrid AI orchestration framework to manage navigation, object detection, and voice interaction tasks. The UE-hybrid-AI-orchestrator handles immediate tasks like voice command processing, while the network-assisted-AI-orchestrator facilitates advanced route optimization using distributed models in the network. Cloud resources are used for high-resolution map generation, creating a seamless driving experience.

### Figures

In the following, preferred implementation examples of the present invention are explained with reference to the accompanying figure:
- Fig. 1:: shows an overview of the invention;
- Fig. 2:: shows a high-level architecture according to the invention;
- Fig. 3:: shows an exemplary implementation of the invention within the core architecture of a telecommunication provider;
- Fig. 4:: shows the method according to the invention;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The invention provides a hybrid AI orchestration system that integrates and utilizes network-related information to enhance the decision-making process of the UE-hybrid-AI-orchestrator. This network (and/or cloud)-related information, supplied by a network-assisted-AI-orchestrator located in the telecommunications network, includes metrics such as network availability, Quality of Service (QoS), latency, and roaming status. By leveraging this data, the UE-hybrid-AI-orchestrator can make intelligent decisions about whether to execute an AI task locally on the user equipment (UE), on a distributed AI model within the telecommunications network, or on a cloud-based AI model within AI provider or hyperscaler cloud. The system also enables task splitting, where AI training and/or inference tasks can be distributed across multiple resources based on the specific requirements of the service.

The network-assisted-AI-orchestrator complements the UE-hybrid-AI-orchestrator by performing multiple essential functions, including:
Informing the UE-hybrid-AI-orchestrator of optimal actions: Based on a combination of factors such as user intent, the type of AI application or service, the capabilities of underlying hardware (HW) resources, and network capabilities (e.g., availability, QoS, reliability, and other KPIs), the network-assisted-AI-orchestrator provides recommendations to steer or split traffic between on-device LLMs and cloud-connected LLMs.

Optimizing cloud-based resource selection: When multiple cloud-connected LLMs are available, such as a centralized LLM in the hyperscaler cloud and a distributed LLM within the telco network, the network-assisted-AI-orchestrator uses the same metrics (e.g., latency, QoS) and AI processing node metrics (e.g. available compute, memory in cloud) to determine where to route the AI traffic for optimal performance.

Enhancing transparency for end users: Optionally, the network-assisted-AI-orchestrator can provide feedback to end customers such as actual users or app/service developers in a transparent and comprehensible manner, explaining how the AI application quality could be improved under specific orchestration rules (e.g., compliance by the OEM with enhanced network management policies). This feature ensures that network limitations do not unjustifiably result in a diminished user experience.

Leveraging advanced sensing and analytics for AI inference: When AI queries and inference inputs are directed to cloud-based LLMs, the network-assisted-AI-orchestrator integrates network-related and sensing information from multiple sources, including Integrated Sensing and Communication (ISAC), Network Data Analytics Function (NWDAF), RAN Intelligent Controller (RIC), and Management Data Analytics Function (MDAF). By providing context-rich inputs to AI inference processes, the system can apply guardrails to prevent hallucinations caused by incomplete data and deliver high-confidence, context-aware feedback.

Improving multi-modal AI system performance: With the rise of multi-modal AI applications - requiring the processing of text, images, video, and audio-the data volume transferred between the UE and cloud-based LLMs is increasing. This directly ties the user experience to the quality of network connectivity. The network-assisted-AI-orchestrator collaborates with the UE-hybrid-AI-orchestrator to actively improve and ensure network connectivity quality. For example, through mechanisms like URSP in slicing or a quality-on-demand API, the hybrid AI orchestrator can proactively influence the network conditions, moving beyond passive reliance on network metrics to actively influencing network connection quality.

Technical Advantages: This invention creates a comprehensive and intelligent hybrid AI orchestration system that: i) Dynamically adapts to specific AI task requirements using real-time network and resource information, ii) Minimizes latency and enhances reliability by intelligently distributing tasks across device, network, and cloud resources, iii) Prevents hallucinations and enhances feedback accuracy for AI inference by integrating context-rich inputs, iv) Actively improves network conditions to ensure the quality of service for data-intensive AI applications, particularly those involving multi-modal input and output.

By enabling these features, the invention significantly improves the efficiency, scalability, and user experience of AI systems, addressing limitations in existing solutions while supporting the growing complexity of AI applications.

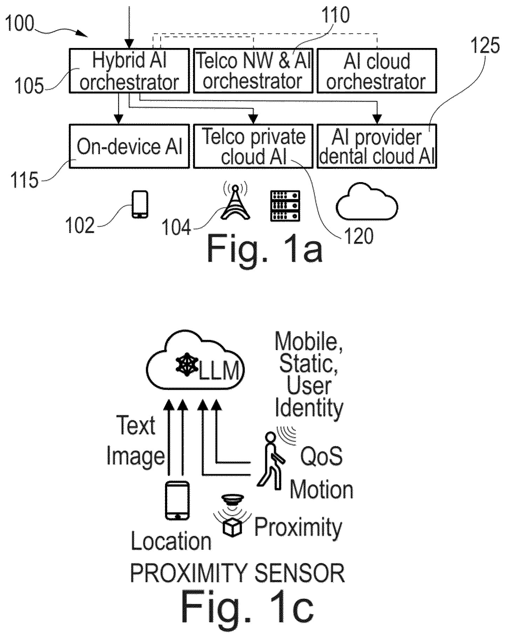

Fig. 1 illustrates three distinct approaches, Fig. 1a) and 1c), for a hybrid AI orchestration system 100 enabled by the collaboration between the UE-hybrid-AI-orchestrator 105, implemented within user equipment (UE) 102, and the network-assisted-AI-orchestrator 110, located within the telecommunications network 104. These approaches demonstrate how network-related information and sensing capabilities are leveraged to optimize AI task execution across on-device AI models 115, remote AI models 120, and cloud-based AI models 125.

The first approach, titled NW-assisted hybrid AI orchestrators, shown in Fig. 1a highlights the interaction between the UE-hybrid-AI-orchestrator 105 and the network-assisted-AI-orchestrator 110 to dynamically manage the execution of AI tasks. In this approach, the network-assisted-AI-orchestrator 110 collects network-related information, such as network availability, QoS, latency, and roaming status, from the telecommunications network 104. This information is shared with the UE-hybrid-AI-orchestrator 105, which analyzes it to determine the most suitable execution location for the AI task. Depending on network conditions and task requirements, the UE-hybrid-AI-orchestrator 105 can steer tasks to the on-device AI model 115 for local execution, the remote AI model 120 within the telecommunications network 104, or the cloud-based AI model 125 in a remote cloud environment. Furthermore, the network-assisted-AI-orchestrator 110 can request QoS guarantees from the telecommunications network 104 for specific AI tasks that require low latency or high reliability, ensuring that tasks executed in the cloud-based AI model 125 meet the required performance standards. This approach enhances system reliability and user experience by ensuring that AI tasks are executed efficiently under varying network conditions.

A second approach, titled Split AI inference for fast/accurate execution demonstrates how the hybrid AI orchestration system 100 enables task splitting for optimized AI inference. In this method, the UE-hybrid-AI-orchestrator 105 generates preliminary outputs using a local on-device AI model 115, such as draft tokens for a text generation task or basic object recognition in an image. These draft outputs are then transmitted to a cloud-based AI model 125 via the network-assisted-AI-orchestrator 110 for further processing and validation. The cloud-based AI model 125 performs speculative decoding or parallel processing to refine the results, ensuring both speed and accuracy. For example, in a text generation task, the on-device AI model 115 may generate a sequence of tokens locally, which are then sent to the cloud-based AI model 125 for verification and refinement. By dividing tasks between local and cloud resources, this approach reduces processing time while maintaining high-quality results, making it suitable for applications requiring a balance of efficiency and precision.

The third approach, titled Sensing and network-enriched AI inference, shown in Fig. 1c focuses on integrating real-time sensing data and network analytics to generate context-rich inputs for AI inference. In this method, the network-assisted-AI-orchestrator 110 gathers data from device sensors on the UE 102, such as motion, proximity, and location, as well as network-related information from the telecommunications network 104. Sources such as Integrated Sensing and Communication (ISAC), Network Data Analytics Function (NWDAF), RAN Intelligent Controller (RIC), and Management Data Analytics Function (MDAF) provide additional analytics to enhance the contextual understanding of the AI task. The enriched data is transmitted to the cloud-based AI model 125, which uses it to improve inference accuracy and reliability. By integrating context-rich inputs, the system can apply guardrails to prevent hallucinations in AI outputs, ensuring high-confidence and contextually aligned feedback. For example, in a navigation application, real-time motion and proximity data from the UE 102, combined with traffic analytics from NWDAF, allow the AI model 125 to generate precise and context-aware route recommendations.

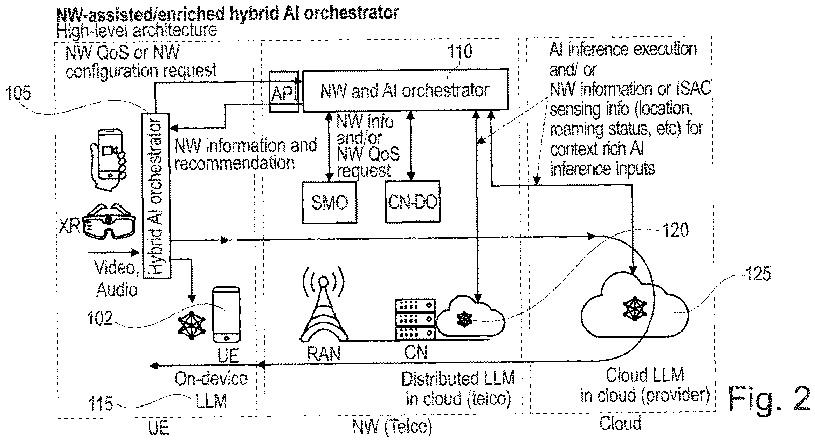

Fig. 2 depicts a high-level architecture of the hybrid AI orchestration system 100, illustrating the interaction between the UE-hybrid-AI-orchestrator 105, the network-assisted-AI-orchestrator 110 located in the telecommunications network 104, and AI models distributed across on-device AI models 115, remote AI models 120 within the network, and cloud-based AI models 125. The figure highlights the communication interfaces and the respective roles of the components in the orchestration of AI tasks.

On the left side of the figure, the UE 102 is shown, which includes the UE-hybrid-AI-orchestrator 105. The UE-hybrid-AI-orchestrator 105 is responsible for initiating AI requests based on tasks received from applications running on the UE 102. Examples of such tasks include processing video or audio data. If additional computational resources and/or network-related information are required, the UE-hybrid-AI-orchestrator 105 transmits a request to the network-assisted-AI-orchestrator 110 located in the telecommunications network 104. This request may include requirements for network-related information, e.g., availability, latency, or QoS or remote AI capability information, e.g., computational capacity, AI model features.

The network-assisted-AI-orchestrator 110 receives these requests and interacts with various components within the telecommunications network 104, such as the service management and orchestration (SMO) component in radio access network (RAN) and the core network orchestration domain (CN-DO). These components enable the network-assisted-AI-orchestrator 110 to gather detailed network-related information and/or fulfill QoS requests, ensuring the AI task can be executed optimally. The collected network-related information is then transmitted back to the UE-hybrid-AI-orchestrator 105, enabling it to make informed decisions on whether to execute the AI task on the on-device AI model 115, the distributed AI model 120 in the telecommunications network 104, or centralized AI model in cloud 125.

The middle section of the figure illustrates the telecommunications network 104, which serves as an intermediate processing layer for distributed AI models. The network-assisted-AI-orchestrator 110 can route tasks to a remote AI model 120 located within the network if the network conditions and computational capabilities support the task's requirements. This configuration provides an efficient balance between low latency and resource availability, ensuring responsive AI inference for the user.

The right side of the figure shows the cloud-based AI model 125, which resides in a cloud environment operated by a cloud provider. Tasks requiring extensive computational resources or advanced AI model capabilities are transmitted by the UE-hybrid-AI-orchestrator 105 to the centralized AI model in cloud 125. The centralized AI model 125 may also receive context-rich inputs from the network-assisted-AI-orchestrator 110, including network-related and sensing information from sources such as ISAC, NWDAF, RIC, or MDAF. This information enhances the accuracy and reliability of AI inference, particularly for tasks requiring high confidence or alignment with real-world context.

The figure further illustrates that the UE-hybrid-AI-orchestrator 105, depending on the feedback from the network-assisted-AI-orchestrator 110, can either:
- Execute tasks locally on the on-device AI model 115 when network conditions or task requirements favor local execution,
- Forward tasks to the distributed AI model 120 within the telecommunications network 104, or
- Transmit tasks to the centralized AI model 125 for execution when advanced computational resources are required.

This architecture demonstrates the flexibility and adaptability of the hybrid AI orchestration system 100. By dynamically distributing AI tasks based on real-time conditions and resource availability, the system ensures optimal performance, reduced latency, and improved efficiency.

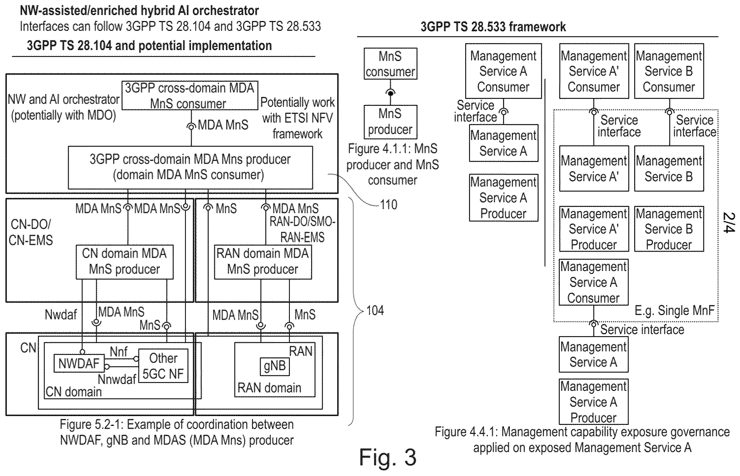

Fig. 3 illustrates a potential implementation of the hybrid AI orchestration system 100, with particular focus on the network-assisted-AI-orchestrator 110, its interfaces, and its interactions with various network entities in the telecommunications network 104. The figure highlights how the system leverages standards defined in 3GPP TS 28.533 and 3GPP TS 28.104, particularly the Service-Based Management Architecture (SBMA) and Management Data Analytics (MDA) framework, to coordinate AI tasks, retrieve analytics, and/or manage network resources efficiently.

The left section of the figure 3 shows the architecture under 3GPP TS 28.104, where the network-assisted-AI-orchestrator 110 functions as a cross-domain Management Data Analytics (MDA) service producer and consumer. The system uses the Management Service (MnS) framework as its fundamental building block. An MnS is a set of offered capabilities enabling management and orchestration of network services. MnS producers provide these capabilities, which can be consumed by MnS consumers with appropriate authorization and authentication. In this context:
- The network-assisted-AI-orchestrator 110 acts as an MnS producer, offering services such as network-related analytics, AI inference recommendations, and QoS management through standardized interfaces.
- The UE-hybrid-AI-orchestrator 105 in the user equipment (UE 102) functions as an MnS consumer, retrieving analytics and recommendations for AI task distribution.

The MnS producer exposes its services through standardized service interfaces composed of individually specified MnS components. For example, the management data analytics function (MDAF) within the telecommunications network 104 can act as an MnS producer, providing analytics based on input data collected from network functions such as the gNB in the RAN or NWDAF or other NFs in the core network.

In the context of SBMA, the MDA MnS producer may enable any authorized consumer, such as the UE-hybrid-AI-orchestrator 105, to request and receive network analytics. The MDAF, a key management function in the architecture, may perform multiple roles, including:
- Acting as an MnS producer for providing network analytics to orchestrators such as the network-assisted-AI-orchestrator 110.
- Acting as an MnS consumer when requesting data from the Network Data Analytics Function (NWDAF).
- Interfacing with other non-3GPP management systems for data integration.

Depending on the use case, the MDA MnS producer can generate analytics based on input data from different network entities, such as gNB reports in the RAN or specific core network functions. The analytics results produced by NWDAF may also be utilized by the MDAF to enhance its output.

The right section of Fig. 3 illustrates the 3GPP TS 28.533 framework, emphasizing the interaction between MnS producers and MnS consumers. This architecture supports coordination between entities like NWDAF, gNB, and MDA MnS producers for management data analytics purposes. The figure depicts the governance and exposure of management services through clearly defined interfaces, ensuring secure and efficient access to analytics and orchestration services.

The network-assisted-AI-orchestrator 110 leverages this framework by serving as a cross-domain MDA MnS producer and consumer. It obtains comprehensive network-related analytics, such as QoS metrics, network capacity, and latency, which are used to inform AI task distribution and optimize resource utilization. Additionally, the network-assisted-AI-orchestrator 110 provides AI inference inputs and analytics feedback to other network entities, such as domain-specific orchestrators (e.g., RAN-DO or CN-DO) and management systems.

Technical Advantages:
- The use of SBMA and MDA frameworks ensures seamless interaction between network entities and orchestrators through standardized interfaces.
- By incorporating cross-domain analytics from MDAF and NWDAF, the network-assisted-AI-orchestrator 110 enhances its decision-making capabilities, allowing for precise AI task distribution and QoS management.
- The architecture supports scalability and interoperability with both 3GPP-defined and non-3GPP management systems, such as those following the ETSI NFV framework.

Example Implementation: In a video streaming application, the UE-hybrid-AI-orchestrator 105 requests network-related information, such as current bandwidth and QoS availability, from the network-assisted-AI-orchestrator 110. The network-assisted-AI-orchestrator 110 retrieves this information from the MDAF, which aggregates data from NWDAF and other network functions. Based on the analytics, the UE-hybrid-AI-orchestrator 105 decides to execute basic AI tasks, such as speech-to-text conversion, on the on-device AI model 115, while offloading more complex tasks, such as video-based reasoning, to the distributed or centralized AI model 125. This collaborative framework ensures optimal task distribution, reduced latency, and improved user experience.

### (I revised this document until here)

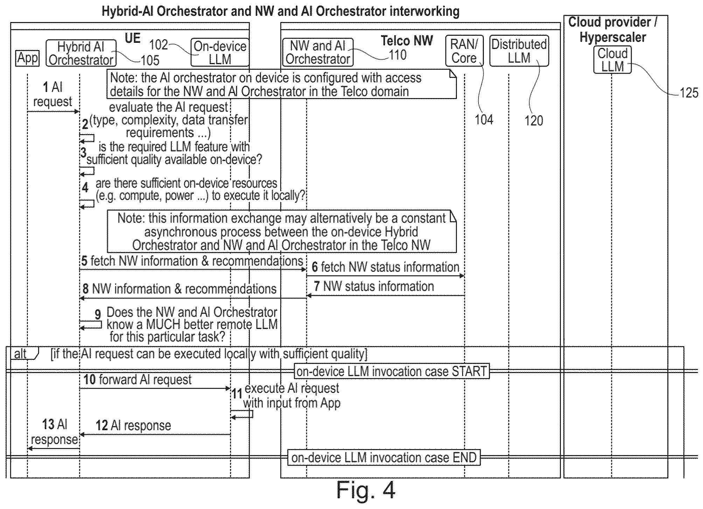

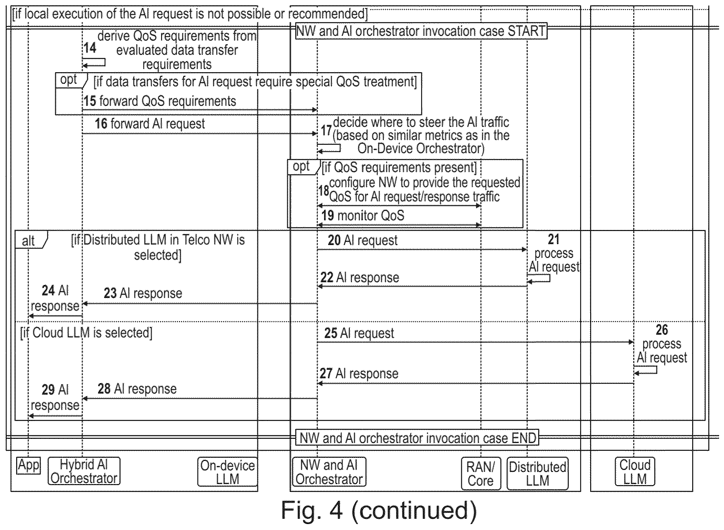

Fig.4 shows a Message Flow in NW-assisted/enriched Hybrid AI Orchestration Fig. 4 illustrates the hybrid AI orchestration system 100 in detail, showing how the UE-hybrid-AI-orchestrator 105, network-assisted-AI-orchestrator 110, and AI models (on-device AI model 115, distributed AI model 120, and cloud-based AI model 125) interact to execute an AI request under varying network conditions. The figure highlights two execution paths: on-device execution and remote execution. Each step is explained with its technical effects and advantages.

### Steps 1-9: Initial AI Request Evaluation and Network Information Retrieval

1. The UE-hybrid-AI-orchestrator 105 receives an AI request generated by an application running on the UE 102. This request is transmitted through the application's SDK, integrated into the device OS. Technical Effect: This architecture ensures seamless interaction between AI applications and the UE-hybrid-AI-orchestrator 105, providing a unified interface for AI task management while abstracting the complexity of orchestration.
2. The UE-hybrid-AI-orchestrator 105 evaluates the AI request, analyzing its type, complexity, and anticipated input/output data. Technical Effect: By understanding the task's computational and data requirements upfront, the orchestrator minimizes resource wastage and prevents overloading the system.
3. The UE-hybrid-AI-orchestrator 105 checks the availability of a suitable on-device AI model 115 to determine if the request can be executed locally with acceptable quality. Technical Effect: This step ensures that the system prioritizes local execution when feasible, leveraging the reduced latency and higher security of on-device AI models.
4. The UE-hybrid-AI-orchestrator 105 estimates the required resources (computational power, storage, and power consumption) and compares them with currently available resources on the UE 102. Based on this evaluation, it decides whether local execution is possible. Technical Effect: This prevents system instability by ensuring tasks are not executed locally when resources are insufficient. It also provides flexibility, allowing users to influence decision-making (e.g., by enabling power-saving modes).
5-8. If the UE-hybrid-AI-orchestrator 105 determines that additional network-related or AI model information is needed, it interacts with the network-assisted-AI-orchestrator 110 located in the telecommunications network 104. The network-assisted-AI-orchestrator 110 queries the RAN/Core for network conditions (e.g., QoS, latency, and bandwidth) and checks the availability of AI models on the distributed AI model 120. The information is then sent back to the UE-hybrid-AI-orchestrator 105. Technical Effect: The ability to query real-time network conditions and remote AI model capabilities enables more accurate decision-making, optimizing resource allocation and task distribution.
9. The UE-hybrid-AI-orchestrator 105 evaluates the received information to determine whether the remote AI model offers significantly better quality under the current network conditions. Technical Effect: This step ensures that the best execution location is chosen, balancing quality, latency, and resource availability.

### Steps 10-13: On-Device AI Execution

If the UE-hybrid-AI-orchestrator 105 determines that the AI request can be executed locally:
10. The UE-hybrid-AI-orchestrator 105 forwards the AI request to the on-device AI model 115.
11. The on-device AI model 115 processes the request and generates a response.
12. The response is returned to the UE-hybrid-AI-orchestrator 105.
13. The UE-hybrid-AI-orchestrator 105 forwards the response to the AI application running on the UE 102. Technical Effect: Local execution minimizes latency, conserves network bandwidth, and enhances data privacy by keeping sensitive information on the device.

### Steps 14-19: Remote Execution with QoS Considerations

If on-device execution is not feasible or recommended, the UE-hybrid-AI-orchestrator 105 forwards the request to the network-assisted-AI-orchestrator 110:
14. The UE-hybrid-AI-orchestrator 105 estimates the expected input/output data transfer for the AI request and derives QoS requirements (e.g., low latency or high bandwidth). Technical Effect: Ensures the network is adequately configured to handle the data transfer, preventing congestion and maintaining performance.
15. The QoS requirements are sent to the network-assisted-AI-orchestrator 110, which interacts with the RAN/Core to configure QoS mechanisms. Technical Effect: QoS guarantees ensure reliable data transfer, particularly for bandwidth-intensive or latency-sensitive tasks.
16. The AI request, along with QoS parameters, is forwarded to the network-assisted-AI-orchestrator 110. Steps 15 and 16 could be combined in a single request, with the QoS Requirements being an optional set of parameters. Technical Effect: This centralized coordination minimizes delays in resource allocation and avoids redundant interactions.
17. The network-assisted-AI-orchestrator 110 evaluates all available options, including the distributed AI model 120 and cloud-based AI model 125, using metrics such as latency, resource availability, and task complexity. Based on this evaluation, it decides where to execute the AI request. The decision can be based on similar metrics as in the On-Device Orchestrator. Technical Effect: Optimizes task distribution by leveraging both edge and cloud resources, ensuring efficiency and scalability.
18. If QoS mechanisms are required, the network-assisted-AI-orchestrator 110 interacts with the RAN/Core to configure them.
19. The network-assisted-AI-orchestrator 110 establishes a monitoring process to ensure the QoS mechanisms remain active and effective. Technical Effect: Continuous monitoring prevents QoS degradation, ensuring consistent task performance.

### Steps 20-24: Execution on Distributed AI Model

If the AI request is executed on the distributed AI model 120 within the telecommunications network 104:
20. The network-assisted-AI-orchestrator 110 forwards the request to the distributed AI model 120.
21. The distributed AI model 120 processes the request and generates a response.
22. The response is sent back to the network-assisted-AI-orchestrator 110.
23. The network-assisted-AI-orchestrator 110 transmits the response to the UE-hybrid-AI-orchestrator 105.
24. The UE-hybrid-AI-orchestrator 105 forwards the response to the AI application. Technical Effect: Distributed execution reduces latency compared to cloud execution while providing greater computational capabilities than on-device execution.

### Steps 25-29: Execution on Cloud-based AI Model

If the AI request is executed on the cloud-based AI model 125:
25. The network-assisted-AI-orchestrator 110 forwards the request to the cloud-based AI model 125.
26. The cloud-based AI model 125 processes the request and generates a response.
27. The response is returned to the network-assisted-AI-orchestrator 110.
28. The network-assisted-AI-orchestrator 110 transmits the response to the UE-hybrid-AI-orchestrator 105.
29. The UE-hybrid-AI-orchestrator 105 forwards the response to the AI application. Technical Effect: Cloud execution leverages advanced AI models and scalable computational resources, enabling the execution of high-complexity tasks.

## Claims

1. A computer-implemented method for distributing an artificial intelligence, Al, task in a hybrid AI orchestration system, the method comprising:
• initiating an AI request for an AI task at a UE-hybrid-AI-orchestrator associated with user equipment, UE;
• transmitting a request from the UE-hybrid-AI-orchestrator to a network-assisted-AI-orchestrator located in a telecommunications network, the AI request soliciting network-related information and/or remote AI capability information relevant to the AI task;
• receiving, at the UE-hybrid-AI-orchestrator, network-related information and/or remote AI capability information from the network-assisted-Ai-orchestrator;
• analyzing, by the UE-hybrid-AI-orchestrator, the received network-related information and/or remote AI capability information to determine whether to execute the AI task on the UE on an on-device AI model, on a remote AI model within the telecommunications network, and/or on a cloud-based AI model in a remote cloud environment;
• executing the AI task based on the determination made by the UE-hybrid-AI-orchestrator, wherein the UE-hybrid-AI-orchestrator:
∘ transmits the AI task to an on-device AI model if local execution is determined,
∘ transmits the AI task to the remote AI model within the telecommunications network with help of the network-assisted-AI-orchestrator if execution within the telecommunications network is determined, and/or
∘ transmits the AI task to a cloud-based AI model in a remote cloud environment if remote cloud execution is determined.

2. The method according to claim 1, wherein the network-related information comprises at least one of network availability, quality of service, QoS, latency, and/or roaming status, and the remote AI capability information includes at least one of computational availability, AI model capability, and/or data processing latency at one or more remote AI resources.

3. The method according to claim 1, further comprising:
receiving an AI response at the UE-hybrid-AI-orchestrator from one or more of the selected AI models, the response being generated based on the execution of the AI task at the selected location; and providing the AI response to an application on the UE.

4. The method according to claim 1, further comprising: transmitting, by the UE-hybrid-AI-orchestrator, a request to the network-assisted-AI-orchestrator, to provide certain QoS values for the AI task, and forwarding, by the network-assisted-AI-orchestrator, the QoS request to the network.

5. The method according to claim 4, further comprising: receiving, by the network-assisted-AI-orchestrator, a confirmation feedback from the network indicating that the requested QoS values are set or can be guaranteed, and transmitting, by the UE-hybrid-AI-orchestrator, the AI task to the distributed AI model within the telecommunications network in response to receiving the confirmation feedback.

6. The method according to claim 5, further comprising: transmitting, by the UE-hybrid-AI-orchestrator, the AI task to an on-device AI model or a cloud-based AI model in a remote cloud environment if a successful confirmation feedback is not received from the network-assisted-AI-orchestrator.

7. The method according to claim 1, further comprising: distributing the AI task in flexible portions amongst any combination of an on-device AI model, a remote distributed AI model within the telecommunications network, and a cloud-based AI model in a remote cloud environment, wherein each portion is executed by the respective AI entity based on the analysis performed by the UE-hybrid-Ai-orchestrator.

8. The method according to claim 1, further comprising: leveraging, by the network-assisted-AI-orchestrator, network-related and sensing information from one or more sources, including Integrated Sensing and Communication (ISAC), Network Data Analytics Function (NWDAF), RAN Intelligent Controller (RIC), and/or Management Data Analytics Function (MDAF), to generate context-rich inputs for the AI task.

9. The method according to claim 8, wherein the context-rich inputs generated by the network-assisted-AI-orchestrator enable the UE-hybrid-AI-orchestrator to apply guardrails to the cloud-based AI model to address incomplete information, deliver context-aware feedback with a high degree of confidence, and/or prevent hallucinations in the cloud-based AI model's output.

10. The method according to claim 1, wherein the AI task comprises multi-modal input data, including at least one of text, audio, image, or video, and the UE-hybrid-AI-orchestrator analyzes the type of input data to determine the most suitable AI model for executing the task.

11. The method according to claim 1, further comprising: receiving, by the UE-hybrid-AI-orchestrator, network feedback from the network-assisted-AI-orchestrator, wherein the feedback includes dynamic changes in network conditions, and dynamically adjusting the decision on task execution location based on the received real-time feedback.

12. The method according to claim 1, wherein the UE-hybrid-AI-orchestrator collaborates with the network-assisted-AI-orchestrator to split the AI task into subtasks, wherein the subtasks are executed collaboratively by an on-device AI model, a distributed AI model within the telecommunications network, and/or a cloud-based AI model in a remote cloud environment.

13. The method according to claim 1, wherein the analysis by the UE-hybrid-AI-orchestrator of the network-related information and/or remote AI capability information is performed with respect to the specific AI task, such that different AI tasks may result in different decisions regarding execution location or task distribution.

14. A UE-hybrid-AI-orchestrator implemented within a UE, the UE-hybrid-AI-orchestrator being configured to:
• transmit a request to a network-assisted-AI-orchestrator located in a telecommunications network, the request soliciting network-related information and/or remote AI capability information relevant to an AI task;
• receive, from the network-assisted-AI-orchestrator, the network-related information and/or remote AI capability information;
• analyze the received network-related information and/or remote AI capability information to determine whether to execute the AI task on the UE, on a remote AI model within the telecommunications network, and/or on a cloud-based AI model in a remote cloud environment; and
• distribute the AI task based on the determination made.

15. A network-assisted-AI-orchestrator implemented within a telecommunications network, the network-assisted-AI-orchestrator being configured to:
• receive a request from a UE-hybrid-AI-orchestrator implemented within a UE, the request soliciting network-related information and/or remote AI capability information relevant to an AI task;
• collect network-related information, including at least one of network availability, QoS, latency, and/or roaming status and/or obtain remote AI capability information, including at least one of computational availability, AI model capability, and/or data processing latency at one or more remote AI resources;
• provide the collected network-related information and/or remote AI capability information to the UE-hybrid-AI-orchestrator.

16. A communication system configured to distribute an artificial intelligence Al-task in a hybrid AI orchestration system, the system comprising:
• a UE-hybrid-AI-orchestrator of claim 14 implemented within a UE and/or a network-assisted-AI-orchestrator of claim 15 implemented within a telecommunications network;
wherein the system is configured to execute the steps of the method according to any of claims 1 to 13.

## Amended claims

### Amended claims in accordance with Rule 137(2) EPC.

1. A computer-implemented method for distributing an artificial intelligence, Al, task in a hybrid AI orchestration system, the method comprising:
• initiating an AI request for an Al task at a UE-hybrid-AI-orchestrator associated with user equipment, UE;
• transmitting a request from the UE-hybrid-AI-orchestrator to a network-assisted-AI-orchestrator located in a telecommunications network, the AI request soliciting network-related information and/or remote Al capability information relevant to the Al task;
• receiving, at the UE-hybrid-AI-orchestrator, network-related information and/or remote Al capability information from the network-assisted-AI-orchestrator;
• analyzing, by the UE-hybrid-AI-orchestrator, the received network-related information and/or remote Al capability information to determine whether to execute the AI task on the UE on an on-device Al model, on a remote AI model within the telecommunications network, and/or on a cloud-based Al model in a remote cloud environment;
• executing the AI task based on the determination made by the UE-hybrid-AI-orchestrator, wherein the UE-hybrid-AI-orchestrator:
∘ transmits the AI task to an on-device Al model if local execution is determined,
∘ transmits the AI task to the network-assisted-AI-orchestrator for execution by the distributed AI model if execution within the telecommunications network is determined, and/or
o transmits the AI task to a cloud-based Al model in a remote cloud environment if remote cloud execution is determined.
wherein the UE-hybrid-AI-orchestrator is implemented as a dedicated software and/or hardware module integrated in the user equipment and is configured to communicate with a plurality of network-assisted-AI-orchestrators.

2. The method according to claim 1, wherein the network-related information comprises at least one of network availability, quality of service, QoS, latency, and/or roaming status, and the remote Al capability information includes at least one of computational availability, AI model capability, and/or data processing latency at one or more remote AI resources.

3. The method according to claim 1, further comprising:
receiving an AI response at the UE-hybrid-AI-orchestrator from one or more of the selected AI models, the response being generated based on the execution of the Al task at the selected location; and providing the Al response to an application on the UE.

4. The method according to claim 1, further comprising: transmitting, by the UE-hybrid-AI-orchestrator, a request to the network-assisted-AI-orchestrator, to provide certain QoS values for the AI task, and forwarding, by the network-assisted-AI-orchestrator, the QoS request to the network.

5. The method according to claim 4, further comprising: receiving, by the network-assisted-Al-orchestrator, a confirmation feedback from the network indicating that the requested QoS values are set or can be guaranteed, and transmitting, by the UE-hybrid-Al-orchestrator, the AI task to the distributed Al model within the telecommunications network in response to receiving the confirmation feedback.

6. The method according to claim 5, further comprising: transmitting, by the UE-hybrid-AI-orchestrator, the Al task to an on-device AI model or a cloud-based AI model in a remote cloud environment if a successful confirmation feedback is not received from the network-assisted-AI-orchestrator.

7. The method according to claim 1, further comprising: distributing the Al task in flexible portions amongst any combination of an on-device AI model, a remote distributed AI model within the telecommunications network, and a cloud-based AI model in a remote cloud environment, wherein each portion is executed by the respective Al entity based on the analysis performed by the UE-hybrid-AI-orchestrator.

8. The method according to claim 1, further comprising: leveraging, by the network-assisted-Al-orchestrator, network-related and sensing information from one or more sources, including Integrated Sensing and Communication (ISAC), Network Data Analytics Function (NWDAF), RAN Intelligent Controller (RIC), and/or Management Data Analytics Function (MDAF), to generate context-rich inputs for the Al task.

9. The method according to claim 8, wherein the context-rich inputs generated by the network-assisted-AI-orchestrator enable the UE-hybrid-AI-orchestrator to apply guardrails to the cloud-based Al model to address incomplete information, deliver context-aware feedback with a high degree of confidence, and/or prevent hallucinations in the cloud-based Al model's output.

10. The method according to claim 1, wherein the Al task comprises multi-modal input data, including at least one of text, audio, image, or video, and the UE-hybrid-AI-orchestrator analyzes the type of input data to determine the most suitable AI model for executing the task.

11. The method according to claim 1, further comprising: receiving, by the UE-hybrid-AI-orchestrator, real-time network feedback from the network-assisted-AI-orchestrator, wherein the feedback includes dynamic changes in network conditions, and dynamically adjusting the decision on task execution location based on the received real-time feedback.

12. The method according to claim 1, wherein the UE-hybrid-AI-orchestrator collaborates with the network-assisted-AI-orchestrator to split the AI task into subtasks, wherein the subtasks are executed collaboratively by an on-device AI model, a distributed Al model within the telecommunications network, and/or a cloud-based Al model in a remote cloud environment.

13. The method according to claim 1, wherein the analysis by the UE-hybrid-AI-orchestrator of the network-related information and/or remote AI capability information is performed with respect to the specific Al task, such that different AI tasks may result in different decisions regarding execution location or task distribution.

14. A UE-hybrid-AI-orchestrator implemented as a dedicated software and/or hardware module within a UE, the UE-hybrid-AI-orchestrator being configured to:
• transmit a request to a network-assisted-AI-orchestrator located in a telecommunications network, the request soliciting network-related information and/or remote AI capability information relevant to an AI task;
• receive, from the network-assisted-AI-orchestrator, the network-related information and/or remote AI capability information;
• analyze the received network-related information and/or remote AI capability information to determine whether to execute the Al task on the UE, on a remote AI model within the telecommunications network, and/or on a cloud-based AI model in a remote cloud environment; and
• distribute the AI task based on the determination made.

15. A network-assisted-AI-orchestrator implemented within a telecommunications network, the network-assisted-AI-orchestrator being configured to:
• receive a request from a UE-hybrid-AI-orchestrator implemented within a UE, the request soliciting network-related information and/or remote AI capability information relevant to an Al task;
• collect network-related information, including at least one of network availability, QoS, latency, and/or roaming status and/or obtain remote AI capability information, including at least one of computational availability, AI model capability, and/or data processing latency at one or more remote AI resources;
• provide the collected network-related information and/or remote AI capability information to the UE-hybrid-AI-orchestrator,
wherein the network-assisted-AI-orchestrator is further configured to operate in coordination with one or more additional network-assisted-AI-orchestrators.

16. A communication system configured to distribute an artificial intelligence Al-task in a hybrid AI orchestration system, the system comprising:
a UE-hybrid-AI-orchestrator of claim 14 implemented within a UE and/or a network-assisted-Al-orchestrator of claim 15 implemented within a telecommunications network;
wherein the system is configured to execute the steps of the method according to any of claims 1 to 13,
wherein the UE-hybrid-AI-orchestrator is configured to communicate with a plurality of network-assisted-AI-orchestrators.
